Europäisches Patentamt

European Patent Office

Office européen des brevets

(11) Publication number: **0 026 631**

**A1**

(12) **EUROPEAN PATENT APPLICATION**

(21) Application number: **80303337.2**

(22) Date of filing: **24.09.80**

(51) Int. Cl.³: **F 16 J 15/34**
**F 04 D 29/12**

(30) Priority: **25.09.79 GB 7933092**

(43) Date of publication of application:
**08.04.81 Bulletin 81/14**

(84) Designated Contracting States:
**AT BE DE FR GB IT NL SE**

(71) Applicant: **J.H. FENNER & CO. LIMITED**
**Marfleet**
**Hull North Humberside, HU9 5RA(GB)**

(72) Inventor: **Schinagl, Josef**
**Op den Dries 10**
**6471 GS Eygelshoven(NL)**

(74) Representative: **RANSON, Arthur Terence et al,**
**W.P. Thompson & Co. Coopers Building Church Street**
**Liverpool L1 3AB(GB)**

(54) Improvements in or relating to rotary face seals.

(57) A rotary face seal assembly is provided with a self-releasing clip (46) normally engaging with a face seal member (28), carried by an annular sealing member (10), and a counterface member (40) to hold the two parts together as a unit prior to the assembly being offered up into operative position, but disconnecting the two parts automatically as the assembly is moved into its operative position.

--F I G.1--

EP 0 026 631 A1

Croydon Printing Company Ltd.

## DESCRIPTION

"IMPROVEMENTS IN OR RELATING TO ROTARY FACE SEALS".

This invention concerns rotary seals for sealing the passage of a rotary shaft through a stationary housing wall and relates more particularly to so-called rotary face seals of the type comprising an annular sealing member intended to seat in a recess provided therefor in the housing, a face seal member fixedly carried by the annular sealing member in circumscribing relation with the shaft, said face seal member having a free axial end face remote from the annular sealing member, and a counterface member for seating on and rotating with the shaft, the counterface member having an axial end face against which the corresponding end face of the face seal member is resiliently urged to establish a fluid seal between the shaft and the housing.

Rotary face seals of the type described immediately above are in widespread and satisfactory use, for example in automobile water pumps but problems have been experienced in the past, in the assembly of the seal into the water pump, in quickly and accurately locating the counterface member on the shaft and in a required relationship to the face seal. For this purpose, it has already been proposed, in the manufacture of the rotary face seal assembly, to provide a clip extending between the face seal member and the counterface member whereby the two are held in abutting relation and may be handled as a single unit up to the time that the seal assembly is installed in its working position. Once that position has been achieved, however, the clip may become an embarassment if it should become detached from the seal assembly when the latter is in use and although this possibility may be avoided by making the clip of a material which is soluble in the fluid to be sealed, further problems can arise if the clip should then be subjected to premature exposure to the fluid.

According to the broadest aspect of the present invention, therefore, in a rotary face seal assembly of the type described and wherein the counterface member is initially retained on the annular sealing member by means of a clip, the clip is arranged to be self-releasing from said annular sealing member when the latter is introduced into its position of use.

Preferably, this is achieved by providing the clip with an axially directed abutment or the like which is arranged to contact the housing as the annular sealing member is introduced into the recess therein, so that further axial displacement of said clip is prevented and the clip is caused to detach itself from the annular sealing member.

Conveniently, the clip has an annular peripheral portion or equivalent means such as circularly spaced, axially directed fingers which are arranged to engage with the annular sealing member for retaining the counterface member attached thereto and the abutment member is formed as an axial extension to said peripheral portion or said fingers, as the case may be.

The invention will be described further, by way of example, with reference to the accompanying drawings, in which:-

Fig.1 is an axial section through a part of a rotary face seal assembly embodying the invention,

Figs. 2 and 3 are similar sections illustrating stages during the introduction of the seal assembly into a pump housing.

As shown in the drawings, a rotary face seal assembly comprises an annular sealing member generally designated 10 and including axially directed, radially spaced inner and outer walls 12,14 which are connected by a radially extending wall 16.  The annular sealing member 10 is formed from an elastomeric material and is moulded around a correspondingly shaped stiffener 18 which may be of metal. It will be noted that the radially outer wall 14 of the sealing member 10 is provided with a radially directed flange 20.

The free end of the radially inner wall 12 continues in an extension which includes a radially flanged carrier portion 24 connected to the wall 12 by a fold or bellows 22, the carrier 24 together with its radial flange 26 providing a mounting for a face seal member 28 which is usually moulded in a plastics material. The face seal member has a rearwardly extending skirt 30 which is guided for sliding movement within the wall 12, complementary ribs and grooves being provided on the two for this purpose. At its forward axial end, the face seal member has an annular ridge 32, the end face of which constitutes the actual sealing face. It will be noted that an annular spring seat 34 is located around the carrier 24 and that a spring 36 acts between the seat 34 and the radial wall 16 to urge the face seal 28 axially forwardly of the annular sealing member 10.

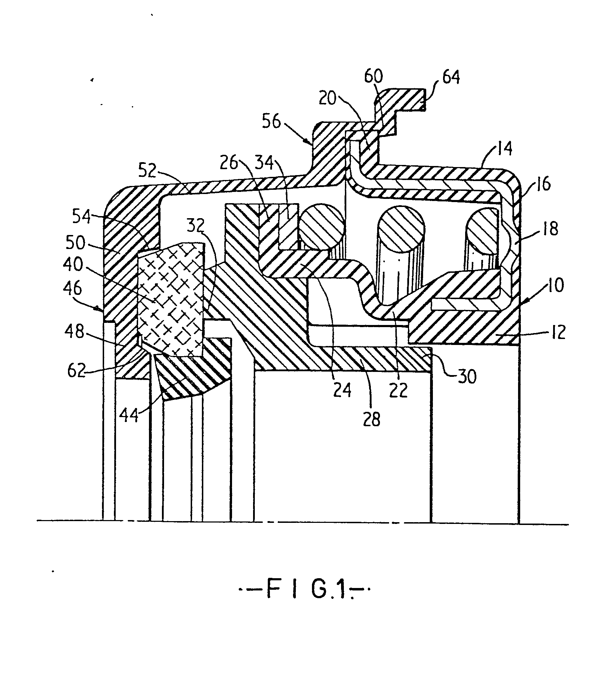

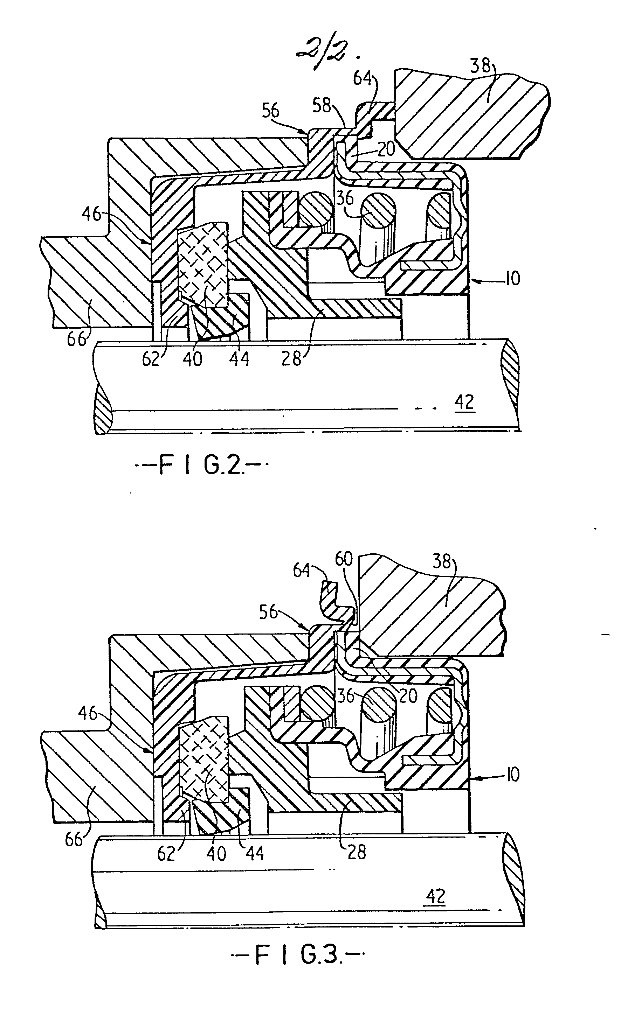

The annular sealing member 10 is intended to be received in a component such as a water pump housing, as diagrammatically indicated in Figs. 2 and 3 by the reference numeral 38, with the face seal 28 arranged to co-operate with a counterface member 40 which in turn is intended to seat on a shaft, typically an impeller shaft, as indicated at 42. In the illustrated embodiment, the counterface member 40 is retained by a wedging and locking action, known per se, on a bush 44 which provides the actual means by which the counterface is secured to the shaft 42.

The assembly comprising the counterface member 40 and bush 44 is itself retained on the rotary face seal assembly by means of a clip 46, conveniently of a plastics material, comprising a central circular disc or annulus 48 from which extend a plurality of circularly spaced, radially directed arms 50 terminating in axially directed fingers 52. The centre disc or annulus 48 and arms 50 of the clip are recessed as required, as shown at 54, to receive the counterface member 40 whilst the free end of each finger 52 is radially outwardly and axially flanged to define a rebate element 56 engaging the flange 20 of the annular sealing member 10. The axially extending portion 58 of the rebate element terminates in a radially inwardly directed rim 60 which, in effect, locks the finger 52 on to the flange 20.

In the rotary face seal assembly as thus far described, not only does the clip 46 serve to retain the counterface member 40 within the assembly to enable that assembly to be handled as a single unit but it is additionally provided at the inner periphery of the central disc or annulus 48 with an annular ridge 62 providing an abutment for the bush 44 during installation into its working position. However, to ensure that the clip may readily be removed when installation is complete or is at an advanced stage, the rebate portion 58 and rim 60 carry an axial extension 64 which, as best seen in Fig.2, comes to bear against the housing 38 as the annular sealing member 10 is introduced into the latter. Such introduction is effected by way of a suitably shaped, open-ended tool 66, the interior of the open end of which conforms to the exterior of the clip 46 and provides the reaction for the support given by the abutment 62 to the bush 44 as the latter engages with the shaft 42. Continued axial movement of the sealing member 10 into the housing 38 then causes radially outward deflection of the abutment 64, as shown in Fig.3, the rebate portion 58 being for this purpose relatively thin walled and this deflection of the abutment 64 effects disengagement of the rim 60 from the flange 20. Thereafter, the clip is free to be disengaged completely from the remainder of the face seal assembly and, after removal of the tool 66, can itself be removed from the vicinity of the housing 38.

It will be appreciated that, in enabling the clip to be removed completely from the pump housing or other environment in which it is to be used, the invention avoids the problems of prior art constructions wherein either the redundant clip may interfere with the operation of the pump or with the proper seating and functioning of some of the components of the face seal assembly. In obviating the need for the clip to be made of a soluble material, it facilitates installation into its eventual position of use, by making reduced demands on the installation procedure and by the physical deflection of the abutment 64 it both positively frees the clip from the remainder of the seal assembly and provides an indication that release has taken place.

CLAIMS.

1. A rotary face seal assembly comprising an annular sealing member for location in a housing, a face seal member displaceably carried by the annular sealing member so as to present an axial exposed end remote therefrom, a counterface member rotatable relative to the annular sealing member and the face seal member and having an axial end face against which said end of the face seal member is resiliently urged to establish a fluid seal, and a clip engaging the annular sealing member and the counterface member whereby the two are retained as a single unit, wherein the clip is of a self-releasing type which automatically disengages from the annular sealing member when the assembly is offered up into its position for use.

2. A rotary face seal assembly as set forth in claim 1, wherein the clip is provided with at least one axially directed abutment arranged to contact a housing for the bearing assembly as the assembly is introduced therein, whereby further axial displacement of the clip is prevented as the assembly is offered up into the housing and the clip is caused to detach itself from the annular sealing member.

3. A rotary face seal assembly as set forth in claim 2, wherein the clip has an annular peripheral portion or a plurality of circularly spaced, axially directed fingers arranged to engage with the annular sealing member for retaining the counterface member attached thereto, and the abutment member is formed as an axial extension to said peripheral portion or said fingers.

4. A rotary face seal assembly as set forth in claim 1, 2 or 3, wherein the clip also serves to retain a locking bush on the face seal member, the bush serving to secure the counterface member to a shaft when in operative position.

-

5. A rotary face seal assembly as set forth in any one of claims 1 to 4 wherein the clip is moulded from a plastics material.

6. A rotary face seal assembly as set forth in claim 2 or any claim appendant thereto, wherein deflection of the or each abutment on contact with the housing is radially outwardly whereby a rebated portion of the abutment is disengaged from a rim section of the annular sealing member.

7. A rotary face seal assembly substantially as herein described with reference to and as illustrated in the accompanying drawings.

1/2.

--F I G.1.--

0026631

2/2.

—FIG.2.—

—FIG.3.—

European Patent
Office

**EUROPEAN SEARCH REPORT**

Application number

EP 80 30 3337.2

| | DOCUMENTS CONSIDERED TO BE RELEVANT | | CLASSIFICATION OF THE APPLICATION (Int. Cl.3) |
|---|---|---|---|
| Category | Citation of document with indication, where appropriate, of relevant passages | Relevant to claim | |
| X | DE - A1 - 2 703 104 (KUPFER-ASBEST-CO) <br> * claims 1 to 25; fig. 1 to 8 * <br> & US - A - 4 136 885 <br> -- | 1-7 | F 16 J 15/34 <br> F 04 D 29/12 |
| X | DE - A1 - 2 740 219 (KUPFER-ASBEST-CO) <br> * claims 1 to 14; page 8, lines 1 to 3; fig. 1 to 4 * <br> & GB - A - 2 003 999 <br> -- | 1-7 | TECHNICAL FIELDS SEARCHED (Int.Cl.3) |
| A | GB - A - 1 428 378 (PIONEER OILSEAL-ING & MOULDING COMPANY LIMITED) <br> * entire document * <br> -- | | F 04 D 29/00 <br> F 16 J 15/00 |
| A | GB - A - 1 465 491 (J.H. FENNER & CO. LIMITED) <br> * entire document * <br> --- - | | |

CATEGORY OF
CITED DOCUMENTS

X: particularly relevant
A: technological background
O: non-written disclosure
P: intermediate document
T: theory or principle underlying
the invention
E: conflicting application
D: document cited in the
application
L: citation for other reasons

&: member of the same patent
family,
corresponding document

The present search report has been drawn up for all claims

| Place of search | Date of completion of the search | Examiner |
|---|---|---|
| Berlin | 03-12-1980 | MASSALSKI |

EPO Form 1503.1   06.78